# FASCICULE DE BREVET EUROPEEN

(11) **EP 1 683 957 B1**
(45) Date de publication et mention de la délivrance du brevet: **28.05.2008**
(21) Numéro de dépôt: 06300036.8
(22) Date de dépôt: 17.01.2006
(51) Int. Cl.: F02M 31/08, F02M 31/093, F02M 35/10, F02M 29/04

(54) **Moteur à combustion interne à injection indirecte**
Verbrennungsmotor mit indirekter Einspritzung
Internal combustion engine with indirect injection

(30) Priorité: 19.01.2005 FR 0500540
(43) Date de publication de la demande: 26.07.2006
(73) Titulaire: Renault S.A.S., 92100 Boulogne-Billancourt (FR)
(72) Inventeur: Gervais, David, 92340 Bourg la Reine (FR); Lefebvre, Alain, 91620 Nozay (FR); Duchaussoy, Yorick, 76160 Darnétal (FR)

(56) Documents cités:
- WO-A-89/00241
- WO-A-99/43943
- FR-A- 2 712 028
- US-A- 3 710 770
- US-A- 5 957 116
- PATENT ABSTRACTS OF JAPAN vol. 007, no. 031 (M-192), 8 février 1983 (1983-02-08) -& JP 57 186043 A (MITSUBISHI DENKI KK), 16 novembre 1982 (1982-11-16)
- PATENT ABSTRACTS OF JAPAN vol. 1999, no. 12, 29 octobre 1999 (1999-10-29) -& JP 11 200907 A (NIPPON SOKEN INC; TOYOTA MOTOR CORP), 27 juillet 1999 (1999-07-27)

## Description

L'invention concerne un moteur à combustion interne notamment pour véhicule automobile, à allumage commandé, à aspiration naturelle ou suralimentée et à injection indirecte, et notamment à injection indirecte d'essence.

Par injection indirecte, on entend que le carburant, en particulier l'essence, est injecté dans la tubulure d'admission, en amont des soupapes d'admission donc en dehors des cylindres. On peut se référer par exemple au document FR 2 712 028 sur ce point.

La formation du mélange en phase de démarrage à froid et de mise en action à froid des moteurs à combustion interne, en injection indirecte d'essence, est un sujet très délicat à traiter.

En effet le carburant injecté dans les conduits d'admission de la culasse au moment du démarrage à froid, et pendant les premières minutes de rotation (mise en action à froid), impacte les parois froides des conduits d'admission. La température des parois est alors faible, le carburant ne se vaporise pratiquement pas. La formation du mélange est alors médiocre et grève lourdement les quantités de polluants (HC) émis pendant cette phase de mise en action du moteur. Pour garantir une richesse constante dans le moteur, le contrôle moteur injecte plus de carburant que nécessaire afin d'établir un film d'essence stable au niveau des parois de l'admission.

Ce fonctionnement à froid est dommageable en termes d'émission de polluants (HC) sur les cycles de conduite (tel qu'on le mesure sur un cycle de conduite normalisé dit « NMVEG ») et a un poids très important sur les émissions de polluants produites sur tout le cycle.

Il apparaît donc opportun de favoriser l'évaporation de carburant, principalement en phase de démarrage à froid et de mise en action, avant et pendant les premières minutes de rotation du moteur.

Selon un premier axe de solutions, on favorise temporairement l'évaporation en apportant de la chaleur au système, notamment grâce à des produits à changement de phase, comme connu par les documents US 4 332 221 ou US 5 307 780.

Selon un autre axe, on tente de mettre à profit l'existence d'un système de recirculation des gaz d'échappement (le système dit EGR « exhaust gaz recirculation »). Sur les moteurs à combustion interne, un tel système est utilisé pour réduire la consommation, réduire les émissions d'oxyde d'azote ou encore améliorer les performances sur moteurs suralimentés. Typiquement, un circuit EGR relie l'échappement à l'admission (répartiteur ou conduit). Ce circuit peut comporter un ou plusieurs échangeurs et une vanne pour le contrôle de débit de gaz. Cette vanne EGR est commandée par le calculateur. Elle met en communication la partie de circuit venant de l'échappement à celle allant à l'admission. Cette vanne permet de faire varier une section afin de contrôler le débit.

Selon le document JP57186043, il est proposé d'améliorer la préparation du mélange en phase de démarrage à froid, en chauffant l'air d'admission via un échangeur air / gaz d'échappement chaud EGR.

Selon le document JP11200907, il est proposé dans le cadre d'un moteur à injection directe de réchauffer l'air d'admission en y incorporant les gaz brûlés de recirculation EGR.

Divers documents, tels que JP57186049 ou WO9943943 préconisent un diffuseur d'EGR et d'air, au niveau de l'admission, mais ne se préoccupent pas du démarrage à froid (voir aussi le document US 5 957 116 A).

L'invention a pour but de proposer une nouvelle solution améliorant effectivement le démarrage à froid en mettant à profit la présence d'un système EGR.

L'invention atteint son but grâce à moteur thermique à combustion interne et à injection indirecte, comprenant une culasse fermant les cylindres du moteur, la culasse comportant au moins un conduit d'admission d'air à parois formées dans la culasse, et au moins un conduit d'échappement, un circuit de recirculation EGR étant prévu entre au moins un conduit ou un circuit d'échappement et au moins un conduit ou un circuit d'admission, de manière à introduire des gaz recirculés dans ledit conduit d'admission, le conduit d'admission débouchant dans le cylindre par une ouverture contrôlée par une soupape, une buse d'injection étant prévue dans le conduit d'admission en amont de ladite soupape, caractérisé en ce qu'un diffuseur de gaz recirculé comportant de nombreux petits trous est disposé autour d'au moins une partie des parois du conduit d'admission entre la soupape et la buse d'injection de manière à favoriser l'évaporation du carburant déposé sur cette partie de paroi, tant par sa chaleur que par son mouvement aérodynamique.

Avantageusement, les petits trous de diffusion sont plusieurs dizaines et sont dirigés sensiblement radialement, ou avec au moins une certaine composante radiale, part rapport à l'axe du conduit d'admission, de manière à décoller le film de carburant liquide injecté qui ruisselle sur la paroi.

Avantageusement, les trous sont disposés de manière circulaire ou seulement partiellement circulaire, par exemple en demi-lune.

Le diffuseur peut être une pièce rapportée à la culasse ou un noyau de fonderie interne à la culasse.

La présente invention concerne également un procédé de commande d'un moteur thermique caractérisé en ce qu'il comprend au moins les étapes consistant à successivement lors d'une phase de démarrage à froid :
a. collecter tout ou partie des gaz brûlés à l'échappement
b. les envoyer au travers d'un moyen de dérivation, dans une branche de recirculation afin qu'ils soient conduits dans un diffuseur, formée dans la culasse autour de la paroi du conduit d'admission, les gaz brûlés s'échappant alors de ce diffuseur vers le conduit d'admission par des trous.

D'autres caractéristiques et avantages de l'invention apparaîtront à la lecture d'un mode de réalisation de l'invention, en référence aux dessins annexés sur lesquels :
- la figure 1 est une coupe verticale schématique d'un conduit d'admission.
- la figure 2 est une coupe II-II de la figure 1, montrant une première disposition, circulaire, des trous d'injection d'EGR conformément à l'invention.
- la figure 3 est une variante de la figure 2, avec une disposition semi-circulaire des trous d'injection d'EGR conformément à l'invention.
- la figure 4 est une vue en coupe verticale d'une culasse au droit d'un conduit d'admission conforme à l'invention.

Dans la culasse 1 sont formés au moins un conduit d'échappement 10 et un conduit d'admission 2 fermé à sa partie inférieure par le clapet d'une soupape d'admission 3 dont la levée est commandée par un arbre à came 4. L'injection d'essence se fait dans le conduit d'admission 2 grâce à une buse d'injection 5 située en amont de la soupape 3 et envoyant un jet 6 de carburant sur une partie des parois du conduit d'admission 2. De manière connue, la culasse comporte des passages de circulation d'eau de refroidissement 7 et d'huile de lubrification 8 obtenus lors du moulage de la culasse par le placement de noyaux appropriés.

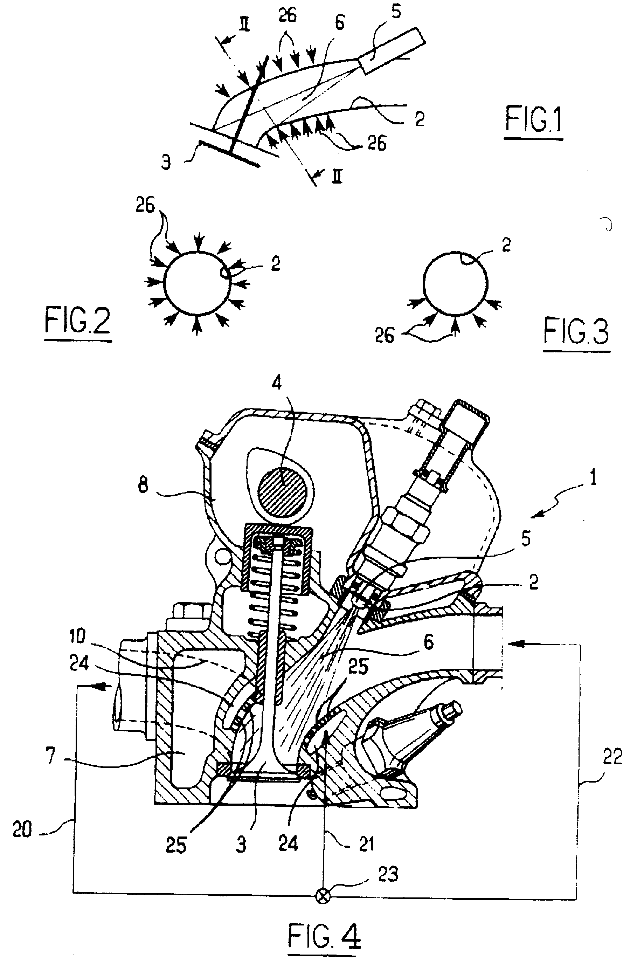

Un circuit EGR schématisé par la référence 20 collecte tout ou partie des gaz brûlés à l'échappement (à un endroit quelconque, soit au niveau du conduit d'échappement, éventuellement sur le collecteur d'échappement, voire par une soupape d'échappement appropriée) et les envoie selon l'invention, au travers d'une vanne 23, dans une branche de recirculation 21 destinée à la diffusion sur la partie aval du conduit d'admission et, éventuellement, dans une branche 22 destinée à une autre partie plus en amont du circuit d'admission. La vanne 23 peut diviser le flux en deux parties égales ou différentes, et/ou orienter la totalité du flux soit dans l'une soit dans l'autre branche 21, 22 en fonction d'instructions du contrôle moteur. La branche 21 conduit les gaz recirculés dans une chambre 24 formée dans la culasse 1 autour de la paroi concernée du conduit d'admission 2 et le gaz s'échappe de cette chambre 24 par des dizaines de petits trous 25 prévus pour faire diffuser le gaz sensiblement radialement vers l'intérieur comme représenté par les flèches 26 des figures 1 à 3. Les trous 25 peuvent être prévus sur toute la périphérie du conduit 2, comme montré en figure 2 ou seulement sur une partie de la périphérie, par exemple, la moitié, comme montré sur la figure 3.

## Revendications

1. Moteur thermique à combustion interne et à injection indirecte, comprenant une culasse (1) fermant les cylindres du moteur, la culasse comportant au moins un conduit (2) d'admission d'air à parois formées dans la culasse (1), et au moins un conduit d'échappement (10), un circuit (20) de recirculation EGR étant prévu entre au moins un conduit d'échappement (10) et au moins un conduit d'admission (2), de manière à introduire des gaz recirculés dans ledit conduit d'admission (2), le conduit d'admission (2) débouchant dans le cylindre par une ouverture contrôlée par une soupape (3), une buse d'injection (5) étant prévue dans le conduit d'admission (2) en amont de ladite soupape (3), **caractérisé en ce qu'**un diffuseur (24) de gaz recirculé comportant de nombreux petits trous (25) est disposé autour d'au moins une partie des parois du conduit d'admission (2) entre la soupape (3) et la buse d'injection (5) de manière à favoriser l'évaporation du carburant déposé sur cette partie de paroi, tant par sa chaleur que par son mouvement aérodynamique.

2. Moteur thermique selon la revendication 1, **caractérisé en ce qu'**il comporte plusieurs dizaines de petits trous (25) de diffusion.

3. Moteur thermique selon l'une quelconque des revendications 1 ou 2, **caractérisé en ce que** les trous (25) sont dirigés sensiblement radialement part rapport à l'axe du conduit d'admission (2).

4. Moteur thermique selon l'une quelconque des revendications 1 à 3, **caractérisé en ce que** les trous (25) sont disposés de manière circulaire autour de la paroi du conduit d'admission.

5. Moteur thermique selon l'une quelconque des revendications 1 à 3, **caractérisé en ce que** les trous (25) sont disposés de manière semi-circulaire autour de la paroi du conduit d'admission.

6. Moteur thermique selon l'une quelconque des revendications 1 à 5, **caractérisé en ce que** le diffuseur est une pièce rapportée à la culasse.

7. Moteur thermique selon l'une quelconque des revendications 1 à 5, **caractérisé en ce que** le diffuseur (24) est une pièce moulée avec la culasse (1).

8. Procédé de commande d'un moteur thermique selon l'une quelconque des revendication 1 à 7 **caractérisé en ce qu'**il comprend au moins les étapes consistant à successivement lors d'une phase de démarrage à froid :
a. collecter tout ou partie des gaz brûlés à l'échappement
b. les envoyer au travers d'un moyen de dérivation (23), dans une branche de recirculation (21) afin qu'ils soient conduits dans un diffuseur (24) formée dans la culasse (1) autour de la paroi du conduit d'admission (2), les gaz brûlés s'échappant alors de ce diffuseur (24) vers le conduit d'admission (2) par des trous (25).

## Claims

1. Indirect-injection internal combustion engine comprising a cylinder head (1) enclosing the cylinders of the engine, the cylinder head comprising at least one air inlet duct (2) with walls formed in the cylinder head (1) and at least one exhaust duct (10), an exhaust gas recirculation or EGR circuit (20) being provided between at least one exhaust duct (10) and at least one inlet duct (2) so as to introduce recirculated gases into the said inlet duct (2), the inlet duct (2) opening into the cylinder via an opening controlled by a valve (3), an injection nozzle (5) being provided in the inlet duct (2) upstream of the said valve (3), **characterized in that** a recirculated-gas diffuser (24) comprising a great many small holes (25) is positioned around at least part of the walls of the inlet duct (2) between the valve (3) and the injection nozzle (5) so as to encourage fuel deposited on this part of the wall to evaporate, both through its heat and through its aerodynamic movement.

2. Combustion engine according to Claim 1, **characterized in that** it comprises several tens of small diffusion holes (25).

3. Combustion engine according to either of Claims 1 and 2, **characterized in that** the holes (25) are directed substantially radially with respect to the axis of the inlet duct (2).

4. Combustion engine according to any one of claims 1 to 3, **characterized in that** the holes (25) are arranged in a circular pattern around the wall of the inlet duct.

5. Combustion engine according to any one of Claims 1 to 3, **characterized in that** the holes (25) are arranged in a semicircle around the wall of the inlet duct.

6. Combustion engine according to any one of Claims 1 to 5, **characterized in that** the diffuser is a component attached to the cylinder head.

7. Combustion engine according to any one of Claims 1 to 5, **characterized in that** the diffuser (24) is a component cast as one with the cylinder head (1).

8. Method for operating a combustion engine according to any one of Claims 1 to 7, **characterized in that** it comprises at least the steps which consist, in succession, during a cold-start phase, in:
a. collecting all or some of the burnt gases in the exhaust
b. sending them through a diverter means (23) into a recirculation branch (21) so that they can be conveyed to a diffuser (24) formed in the cylinder head (1) around the wall of the inlet duct (2), the burnt gases then escaping from this diffuser (24) through holes (25) into the inlet duct (2).

## Patentansprüche

1. Brennkraftmaschine mit indirekter Einspritzung, mit einem Zylinderkopf (1), der die Zylinder des Motors verschließt, wobei der Zylinderkopf wenigstens eine Lufteinlassleitung mit in dem Zylinderkopf (1) ausgebildeten Wänden und wenigstens eine Auslassleitung (10) enthält, wobei zwischen wenigstens einer Auslassleitung (10) und wenigstens einer Einlassleitung (2) ein AGR-Rückführungskreis (20) vorgesehen ist, derart, dass rückgeführte Gase in die Einlassleitung (2) eingeleitet werden, wobei die Einlassleitung (2) durch eine durch ein Ventil (3) gesteuerte Öffnung in den Zylinder mündet, wobei in der Einlassleitung (2) stromaufseitig von dem Ventil (3) eine Einspritzdüse (5) vorgesehen ist, **dadurch gekennzeichnet, dass** ein Diffusor (24) für rückgeführtes Gas, der zahlreiche kleine Löcher (25) aufweist, um wenigstens einen Teil der Wände der Einlassleitung (2) zwischen dem Ventil (3) und der Einspritzdüse (5) angeordnet ist, derart, dass die Verdunstung von Kraftstoff, der sich auf diesem Teil der Wand ablagert, sowohl durch seine Wärme als auch durch seine aerodynamische Bewegung begünstigt wird.

2. Brennkraftmaschine nach Anspruch 1, **dadurch gekennzeichnet, dass** sie' mehrere zehn kleine Diffusionslöcher (25) enthält.

3. Brennkraftmaschine nach einem der Ansprüche 1 oder 2, **dadurch gekennzeichnet, dass** die Löcher (25) in Bezug auf die Achse der Einlassleitung (2) im Wesentlichen radial orientiert sind.

4. Brennkraftmaschine nach einem der Ansprüche 1 bis 3, **dadurch gekennzeichnet, dass** die Löcher (25) kreisförmig um die Wand der Einlassleitung angeordnet sind.

5. Brennkraftmaschine nach einem der Ansprüche 1 bis 3, **dadurch gekennzeichnet, dass** die Löcher (25) halbkreisförmig um die Wand der Einlassleitung angeordnet sind.

6. Brennkraftmaschine nach einem der Ansprüche 1 bis 5, **dadurch gekennzeichnet, dass** der Diffusor ein an den Zylinderkopf angefügtes Teil ist.

7. Brennkraftmaschine nach einem einem der Ansprüche 1 bis 5, **dadurch gekennzeichnet, dass** der Diffusor (24) ein mit dem Zylinderkopf (1) gegossenes Teil ist.

8. Verfahren zum Steuern einer Brennkraftmaschine nach einem der Ansprüche 1 bis 7, **dadurch gekennzeichnet, dass** es wenigstens die Schritte enthält, die nacheinander beginnend in einer Kaltstartphase darin bestehen:
a. alle oder einen Teil der verbrannten Abgase am Auslass zu sammeln und
b. sie durch ein Abzweigmittel (23) in einen Rückführungszweig (21) zu schicken, damit sie in einen Diffusor (24) geleitet werden, der im Zylinderkopf (1) um die Wand der Einlassleitung (2) gebildet ist, wobei die verbrannten Gase dann aus diesem Diffusor (24) durch die Löcher (25) in die Einlassleitung (2) entweichen.
